# EUROPEAN PATENT SPECIFICATION

(11) **EP 0 835 736 B1**
(45) Date of publication and mention of the grant of the patent: **06.03.2002**
(21) Application number: 97117279.6
(22) Date of filing: 06.10.1997
(51) Int. Cl.: B29C 49/42, B29C 49/06, B29C 49/64, B29C 45/04

(54) **Stretch blow molding apparatus and injection stretch blow molding apparatus**
Vorrichtung zum Blasformen und Vorrichtung zum Spritzstreckblasformen
Dispositif pour moulage par étirage - soufflage et dispositif pour moulage par injection étirage-soufflage

(30) Priority: 09.10.1996 JP 28740396
(43) Date of publication of application: 15.04.1998
(60) Divisional application: 01100385.2
(73) Proprietor: NISSEI ASB MACHINE CO., LTD., Nagano-ken (JP)
(72) Inventor: Ogihara, Shuichi, Komoro-shi, Nagano-ken (JP); Fukunishi, Yoshihiro, Komoro-shi, Nagano-ken (JP)
(74) Representative: Wunderlich, Rainer, Dipl.-Ing.

(56) References cited:
- EP-A- 0 158 146
- EP-A- 0 317 644
- EP-A- 0 445 435
- EP-A- 0 479 139
- EP-A- 0 732 187
- WO-A-96/08356
- US-A- 4 280 805
- US-A- 4 280 859
- US-A- 5 282 526
- US-A- 5 322 651
- US-A- 5 498 152

## Description

### Background of the Invention

### Field of Industrial Application

The present invention relates to a stretch blow molding apparatus in accordance with the preamble of claim 1.

### Prior Art

An injection stretch blow molding apparatus is described in Japanese Patent Application Laid-Open No. 8-132517 which has been filed by the applicant.

Such an injection stretch blow molding apparatus comprises an injection molding station for injection-molding preforms, a blow molding station for stretch-blow-molding the injection molded preforms and a transfer station for transferring the preforms from the injection molding station to the blow molding station.

The injection molding station injection-molds a plurality of preforms at the same time and carries the injection-molded preforms to a preform removing section through a rotary disc while the preforms are being held by neck cavity molds and injection core molds. At the preform removing section, the preforms will be removed out of the injection molding station.

The transfer station delivers the simultaneously injection-molded preforms to the blow molding station.

The blow molding station receives the preforms from the transfer station and carries them by carriers which are moved circularly. After the preforms have been heated at a heating section, preforms less than the number of the simultaneously injection-molded preforms are then moved into a blow molding section whereat they are blow-molded into containers. These molded containers will be taken out of the blow molding section at its container removing section.

From US 4,280,859 a method for stretch blow molding containers with handles is known. In this known method a blow mold is used which is provided with a recess for the handle.

From WO 96/08356 A a stretch blow molding apparatus is known by means of which symmetrically designed containers are produced. In this known apparatus the preforms are carried from an injection molding station along a carrying path in a preform carrying direction to a blow molding station. Between the injection molding station and the blow molding station heating means are provided in which the preforms are heated while they are rotating.

US 4,280,805 discloses a stretch blow molding apparatus by means of which containers having a handle can be molded. The apparatus comprises an injection molding station followed by at least one heating station, a blow molding station and an ejection station. The stations are arranged around a rotatable table, which serves as a moving apparatus for moving the preforms in a preform carrying direction starting at the injection molding station in direction of the ejection station. The rotatable table is provided with a number of attaching mechanisms which are designed to rigidly hold the preforms and the containers during the whole molding process in a defined position while the preforms are transported in the preform carrying direction. Thereby, it is ensured that the handles provided at the preforms are always kept in a definite position with respect to the heating stations and the blow molding station.

Since the preforms are always arranged in the same defined position with respect to the heating station, the problem arises in this known apparatus that due to the fact that the heating station is generally not able to generate a constant heat over the entire surface of the preforms, the preforms are not uniformily heated. Consequently, the quality of the produced containers varies depending from the heating behaviour of the heating station.

It is therefore an object of the present invention to provide a stretch blow molding apparatus by means of which containers with a nearly constant high quality can be produced.

According to the present invention, there is provided a stretch blow molding apparatus comprising:
A carrying path for carring a preform having a neck, a barrel, and a handle which is formed adjacent to the boundary between the neck and the barrel in a preform carrying direction;
first rotation means for rotating the preform around its longitudinal axis when the preform is being carried along a given part of the carrying path;
heating means for heating the barrel of the preform when the preform is rotated;
a blow molding section for stretch-blow-molding the preform into a container after the preform has passed through the heating means; and
arrangement means disposed on the way of the carrying path between the heating means and the blow molding section for arranging the handle extending from the preform to face in a given direction.

As the preforms are rotated in the heating section, the handles of the preforms from the heating section will have various different directions. Thus, the handles will be arranged in the given direction before the preforms are carried into the blow molding section. This can prevent the handles from interfering with the blow cavity molds when the preforms are to be carried into the blow molding section or when a blow cavity mold is to be clamped.

The arrangement means may include guide members for guiding the handle of the preform to face in the given direction. This can utilize the force carrying the preforms to arrange the handles thereon in the given direction.

Alternatively, a second rotation means may be provided to rotate the preforms for arranging the handles thereon in the given direction while the preforms are stopped prior to going into the blow molding section. The direction of a rotated handle is sensed by a first sensor. At each time when the handle turns to the given direction, the second rotation means will be stopped.

It is further possible to sense the direction of the handle by a second sensor immediately upstream of the blow molding section. Thus, the blow mold clamping operation can be interrupted when the direction of the handle does not face in the given direction even after it has been subjected to the operation of the arrangement means.

The arrangement means may arrange the handle extending from the preform to face in a direction parallel to the preform carrying direction. This minimizes the width across the carrying path.

The blow molding section may include a blow cavity mold having a pair of split mold portions which are clamped in a direction perpendicular to the preform carrying direction, when this blow cavity mold can include a blow cavity for receiving the barrel of the preform, and at least one recess formed on an outer surface of the blow cavity mold for receiving the handle of the preform.

Thus, the handles of the preform extending parallel to the preform carrying direction can be smoothly received by the recess in the blow cavity mold without any interference therewith. This can reliably prevent the handles from being brought into contact with the blow cavity mold or from being sandwiched between the blow cavity mold portions.

The blow cavity mold may include one recess formed at an upstream position and other recess formed at a downstream position relative to the preform carrying direction. Thus, any interference of the handle with the blow cavity mold can be avoided even if that handle is located forward or rearward of the preform in the preform carrying direction.

The blow cavity mold may include a ring-shaped step extending from a bottom of at least one of the recesses at a position surrounding the boundary between the neck and the barrel of the preform housed within the blow cavity.

Such ring-shaped step can prevent the boundary between the neck and barrel of the preform from being deformed under the action of blowing pressure.

The neck of the preform can be thermally insulated by a thermal insulation shutter while the barrel thereof is being heated, securing that only the barrel of the preform to be stretched is heated. Thus, the neck of the preform can be reliably prevented from being deformed due to heat while at the same time a portion of the preform corresponding to the shoulder of a container can be more effectively heated by a reflective heat from the thermal insulation shutter. This secures a more effective heating.

The thermal insulation shutter may include an opening which has a width larger than the outside diameter of a part of the preform, the part of the preform being adjacent to the thermal insulation shutter which is at the thermal insulation position.

Thus, the thermal insulation shutter can be placed adjacent to the preform without contact therewith. The preform will not be damaged by the thermal insulation shutter.

The heating means may include a heater inserted into the interior of the preform for heating the preform from inside, and heater moving means for retreating the heater to a position in which the heater does not interfere with the preform when the preform is being carried, and for inserting the heater into the preform to a position corresponding to the barrel of the preform when the preform is stopped.

Thus, particularly with a wall-thickened preform, the heater can reliably heat the portion of the preform corresponding to the shoulder of a container which would be insufficiently heated in the conventional manner. This provides good blow characteristics.

Since a handle is formed adjacent to the boundary between the neck and the barrel of the preform, the thermal insulation shutter which is at the thermal insulation position can effectively insulate the neck and the barrel.

The injection cavity mold is asymmetry because of the handle cavities. Therefore, the centerline of the barrel cavity array can be placed closer to the rotating shaft. Thus, the rotating radius of the preforms can be maintained smaller even though preforms with handles are to be injection-molded. This can reduce the dimensions of the system.

Two neck cavity molds may be supported by the rotary member. Each of the two neck cavity molds has a pair of split mold portions for molding the necks of the preforms, and each of the handle cavities in the injection cavity mold has an opening to face one of the neck cavity molds carried to a position of the injection molding section by the rotary member. Thus, the handles of the preforms are molded in the handle cavities closed by one of the neck cavity molds.

Each of the neck cavity molds includes recesses to face the openings of the handle cavities of the injection cavity mold. Thus, these recesses may also function as handle cavities.

The injection cavity mold may include a distributing section for distributing a cooling water around the barrel cavities, when the distributing section is located at the inside of the handle cavities in the radial direction of the rotary member.

Thus, the cooling water distributing section may be located within a space in which there is no handle cavity. This can also improve the balance of weight in the injection cavity mold.

The injection cavity mold may include first cooling channels disposed around the barrel cavities, each of the first cooling channels having an inlet at one end and an outlet at the other end.

The distributing section may have a second cooling channel having at least one supply channel for supplying a cooling water to the inlets of the first cooling channels and at least one drain channel for draining a cooling water from the outlets of the first cooling channels.

The inlets may be arranged along the at least one supply channel at regular intervals, and the outlets may be arranged along the at least one drain channel at the same intervals as the inlets.

One of the inlets which is located at the most upstream position of the at least one supply channel is communicated with one of the outlets which is located at the most upstream position of the at least one drain channel.

Thus, the cooling water passing through the respective cooling channels can be moved through passageways of the same length extending from the entry of the supply channels to the exit of the drain channels. Therefore, the flow of water passing through the cooling channels can be substantially equalized. As a result, substantially the same cooling efficiency can be provided both at the opposite ends of the injection cavity mold and at the center thereof.

### Brief Description of the Drawings

Fig. 1 is a plan view of one embodiment of a stretch blow molding apparatus constructed in accordance with the present invention.

Fig. 2 is a plan view showing a layout of injection molds in the injection molding station of Fig. 1.

Fig. 3 is a plan view of an injection cavity mold shown in Fig. 2.

Fig. 4 is a front view of the distributing section of Fig. 3.

Fig. 5 is a sectional view of the injection molding station.

Fig. 6 is a plan view of the delivering section and blow molding station shown in Fig. 1.

Fig. 7 is a sectional view of the heating device shown in Fig. 6.

Fig. 8 is an enlarged sectional view of the carrier and the preform shown in Fig. 7.

Fig. 9 is a sectional view showing the blow cavity mold in Fig. 6.

Fig. 10 is a fragmentary sectional view, in an enlarged scale, of Fig. 9.

Fig. 11 is a sectional view taken along a line XI-XI of Fig. 10.

### Description of the Preferred Embodiment

A preferred embodiment of the present invention will now be described in detail with reference to the drawings.

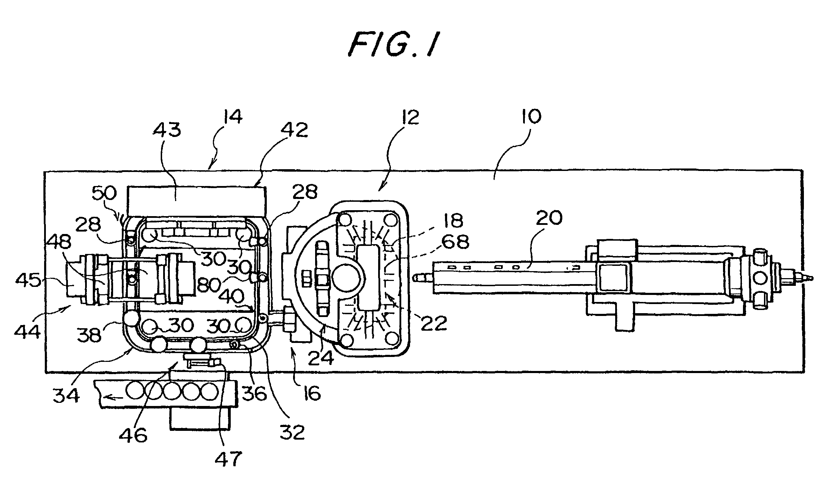

Figs. 1 to 11 show an injection stretch blow molding apparatus constructed in accordance with one embodiment of the present invention.

Fig. 1 is a plan view of an injection stretch blow molding apparatus.

The injection stretch blow molding apparatus comprises a machine base 10 on which there are generally formed an injection molding station 12, a blow molding station 14 and a delivering section 16 between the injection molding station 12 and the blow molding station 14.

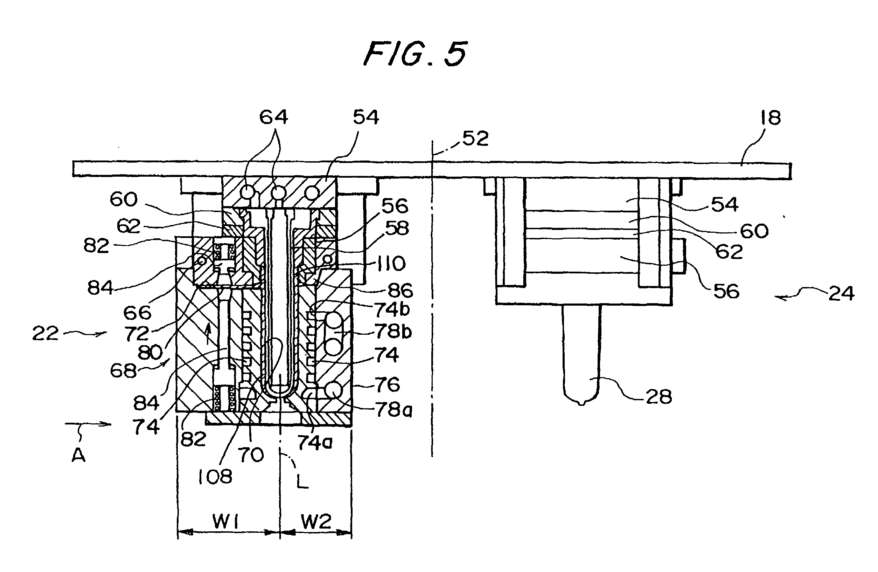

The injection molding station 12 comprises two injection core molds (not shown in Fig. 1) which are located 180 degrees apart and a rotary disc 18 for intermittently circulating the injection core molds along a rotary carrying path. The injection molding station 12 also comprises an injection molding section 22 located opposite to an injection device 20, and a removing section 24 opposed to the injection molding section 22. Each of the injection core molds is stopped at the injection molding section 22 or the removing section 24. As shown in Fig. 5, the injection molding section 22 has an injection cavity mold 68 capable of being clamped relative to each of the injection core molds 58 to injection-mold a plurality (e.g., four) of preforms 28 at the same time, each of the preforms having a neck 110, a barrel 108 and a handle 80 formed at the boundary therebetween.

The removing section 24 can release and remove the preforms 28 out of one of the injection core molds 58.

As shown in Fig. 5, the necks 110 of the preforms 28 are molded by the use of neck cavity molds 56 each of which is formed by a pair of split mold portions. The preforms 28 will be carried toward the removing section 24 by the rotary disc 18 while being held by the neck cavity molds 56 and injection core molds 58.

At the removing section 24, the neck cavity mold 56 may be downwardly moved to partially release the injection core mold 58 before the neck cavity mold 56 is opened to remove the preforms therefrom.

As shown in Fig. 1, the blow molding station 14 comprises a circulatingly carrying means 34 which is formed by four sprockets 30, a carrying chain 32 passed around these four sprockets 30 and a sprocket drive means (not shown), for example, such as an electric motor for rotatably driving one of the sprockets or a rack-and-pinion mechanism including a rack connected to a hydraulic cylinder and a pinion connected to the sprocket.

The carrying chain 32 includes a plurality (e.g., twelve) of carriers 36 fixedly connected thereto and equally spaced. Each of the carriers 36 supports a preform 28 or a container 38. Along a carrying path for the carriers 36, there are provided a receiving section 40 for receiving the preforms 28 from the delivering section 16, a heating section 42 for heating the preforms 28 received at the receiving section 40 to a temperature which is suitable for blow molding, a blow molding section 44 for stretch-blow-molding the preforms 28 heated at the heating section 42 into containers 38, and a container removing section 46 for removing the containers 38 molded at the blow molding section 44 out of the apparatus.

The heating section 42 includes a heating device 43 which may include a plurality of infrared heaters extending along the carrying path and disposed one above another. As the preforms are moved through the heating device 43, the preforms are heated by the heaters uniformly in a circumferential direction thereof while being rotated around their longitudinal axes by the respective carriers 36 which are rotatably driven by operative engagement of their preform rotation sprockets with the preform rotation chain.

The blow molding section 44 has a blow cavity mold 48 which may blow-mold a single preform 28, for example. The blow cavity mold 48 can be clamped against the preform 28 by means of a blow mold clamping mechanism 45.

The container removing section 46 includes a removing device 47 for inverting the container 38 into its upright state in which the container 38 will be removed out of the system.

The delivering section 16 delivers the preforms 28 from the removing section 24 of the injection molding station 12 to the receiving section 40 of the blow molding station 14.

The removing section 24 of the injection molding station 12 removes a plurality of preforms 28 simultaneously injection-molded at the injection molding section 22 out of the injection molding station 12. However, the delivering section 16 may deliver a plurality (e.g., four) of preforms 28 simultaneously removed at the removing section 24 to the receiving section 40 one at a time.

While the injection molding station 12 is designed to injection-molds preforms 28 in their upright state, the delivering section 16 inverts the preforms 28 which are in turn delivered to the blow molding station 14 in their inverted state.

In the blow molding station 14, further, the carrying means 34 intermittently moves the carriers 36. Between the heating section 42 and the blow molding section 44 is provided a stand-by section 50 whereat the heated preforms 28 are temporally stopped and waited.

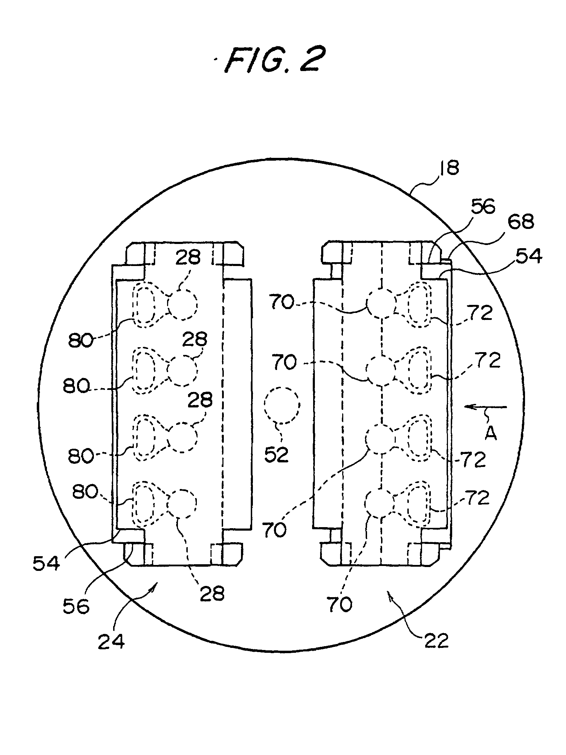

Figs. 2 to 5 show the injection molds in the injection molding station.

Fig. 2 is a plan view illustrating the layout of injection molds as viewed through the rotary disc 18.

Referring to Fig. 2, the rotary disc 18 is alternately rotated in opposite directions through 180 degrees around a rotating shaft 52.

An arrow A indicates a direction in which resin is injected in the injection device. The injection molding section 22 is provided on the side of the injection device around the rotating shaft 52 while the removing section 24 is provided on the opposite side to the injection molding section 22.

The rotary disc 18 includes two sets of injection core molds 58 and of neck cavity molds 56. Each set is mounted on the rotary disc 18 to be circulated and stopped at the injection molding section 22 or removing section 24 (see Fig. 5). Fig. 2 shows injection core mold holding plates 54 and neck cavity molds 56 on the rotary disc 18.

Referring now to Fig. 5, between each of the injection core mold holding plates 54 and each of the neck cavity molds 56 are mounted an injection core mold fixing plate 60 on which injection core mold 58 is mounted and an eject plate 62 for removing the preforms 28. The injection core mold holding plates 54 and neck cavity molds 56 are provided with cooling channels 64 and 66 to which cooling water is supplied through the rotating shaft 52 of Fig. 2 to cool the preforms 28.

As shown in Figs. 2 and 5, in the injection molding section 22, the injection cavity mold 68 is fixedly mounted for one set of injection core mold 58 and neck cavity mold 56.

The injection cavity mold 68 may include four barrel cavities 70 for defining the external shape of the barrels 108 in the preforms 28.

The top of the injection core mold 68 is formed with handle cavities 72 for molding handles 80, these handle cavities 72 being located corresponding to the respective barrel cavities 70. The handle cavities 72 are top-opened and may be closed by the neck cavity mold 56 when it is clamped relative to the injection cavity mold 68 (see Fig. 5). In addition, the neck cavity mold 56 may also be formed with recesses which are part of the handle cavities.

In Fig. 5, line L is the centerline of an array of the barrel cavities 70. W1 is the width of an outside part of the injection cavity mold 68 including the handle cavities 72, measured from the centerline L in the radial direction of the rotary disc 18. Similarly, W2 is the width of an inside part of the injection cavity mold 68. W2 is smaller than W1 because the inside part does not include the handle cavities 72. In this case, it is impossible to locate the handle cavities 72 inside of the centerline L because the parts around the rotating shaft 52 would interfere with an extending part of the injection cavity mold 68 including the handle cavities 72. If it is wanted to locate the handle cavities 72 inside, the centerline L must be shifted outward. This would increase the distance between the preforms and the rotating shaft 52, leading to increase in the size of the apparatus.

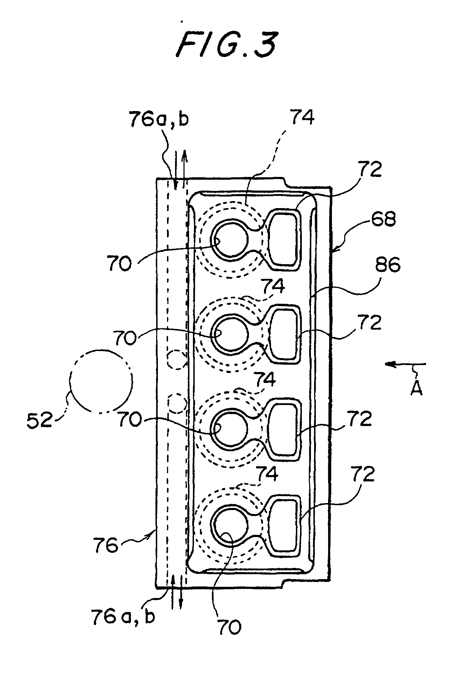

Referring to Figs. 3 and 5, each of the injection cavity molds 68 includes a cooling channel 74 formed therein around a corresponding barrel cavity 70. As shown in Fig. 5, the cooling channel 74 has water inlet and outlet 74a, 74b opened on a side wall of the injection cavity mold 68, respectively at a lower position and an upper position of the side wall. This side wall is closer to the rotating shaft 52 than the barrel cavity 70 is to the rotating shaft 52.

The side wall of the injection cavity mold 68 to which the water inlet and outlet 74a, 74b are opened includes a distributing section 76 for distributing the cooling water to the cooling channels 74 in the respective barrel cavities 70, as shown in Figs. 3 to 5. In the illustrated embodiment, the distributing section 76 is formed in the mold although it may be formed by a sheet metal.

When the distributing section 76 is located at the inside part of the injection cavity mold 68 to be opposite to the handle cavities 72, the balance of weight can be taken in the injection cavity mold 68 on the opposite sides of the centerline L.

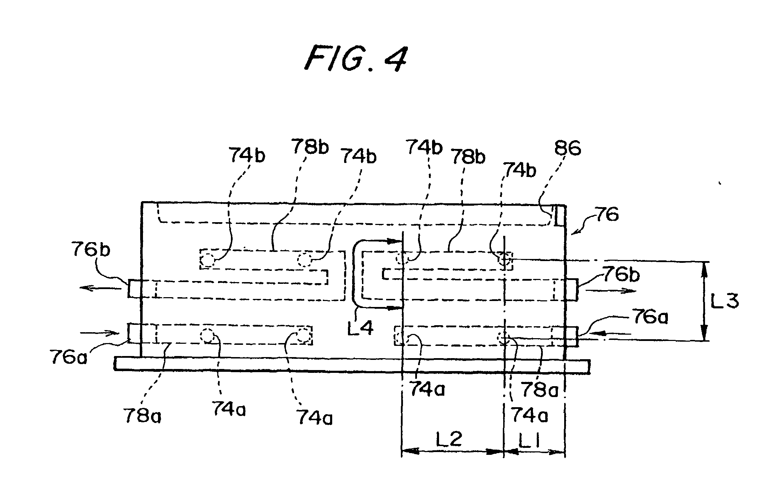

As shown in Fig. 4, cooling water inlet and outlet 76a, 76b are formed on each side of the distributing section 76. A set of inlet and outlet 76a, 76b are connected to a cooling line for cooling a set of two barrel cavities 70. Provision of two sets of such cooling lines enables the length of each cooling line to be reduced with increase of the cooling efficiency.

As shown in Fig. 4, each of the inlets 76a is formed at a position close to the bottom portion of the preforms 28 housed in the barrel cavities. Each inlet 76a is connected to a supply channel 78a to which the two inlets 74a are opened.

On the other hand, each of the outlets 76b formed above one of the water inlet 76a is connected to a drain channel 78b to which the two outlets 74b are opened. Each of the drain channels 78b extends once to the center of the distributing section 76, turns downwardly at a position near the center of the distributing section 76, and then communicates with the outlets 76b.

As shown in Fig. 4, within one set of the cooling line, it is now assumed that the distance between the outlet 76a and the closest inlet 74a is L1; the distance between two water inlets 74a and the distance between two water outlets 74b are respectively L2; the length of the cooling channel between the mating inlet and outlet 74a, 74b is L3; and the distance between the upper and lower drain channels is L4.

In each of the supply channels 78a, it is assumed that the inlet 74a which is closer to the inlet 76a is located upstream while the other inlet 74a is located downstream. In each of the drain channels 78b, it is assumed that the water outlet 74b which is farther from the outlet 76b is located upstream, this outlet 74b communicating with the upstream water inlet 74a.

Thus, the length of cooling line in which the cooling water flows through the upstream water inlet and outlet 74a, 74b becomes L1+L3+L2+L4+L2+L1. Similarly, the length of cooling line in which the cooling water flows through the downstream water inlet and outlet 74a, 74b becomes L1+L2+L3+L4+L2+L1. Thus, these cooling lines are equal in length to each other. Therefore, the flow of cooling water around two barrel cavities 70 can be substantially equalized.

The injection molding process is performed by clamping one set of injection core mold 58 and neck cavity mold 56 on the rotary disc 18 and the injection cavity mold 68 to form mold cavities into which a plastic material is injected. Thus, cylindrical end-closed preforms 28 each having a neck 110 with a handle 80 are molded, as shown in Fig. 5.

Each of the neck cavity mold 56 and injection cavity mold 68 includes a push pin 84 having a spring 82. These springs 82 push the push pin 84 to separate the molded handle 80 from the neck cavity mold 56 and injection cavity mold 68.

The top of the injection cavity mold 68 is formed with a tapered portion 86 for receiving the neck cavity mold 56 to provide a positive engagement therebetween.

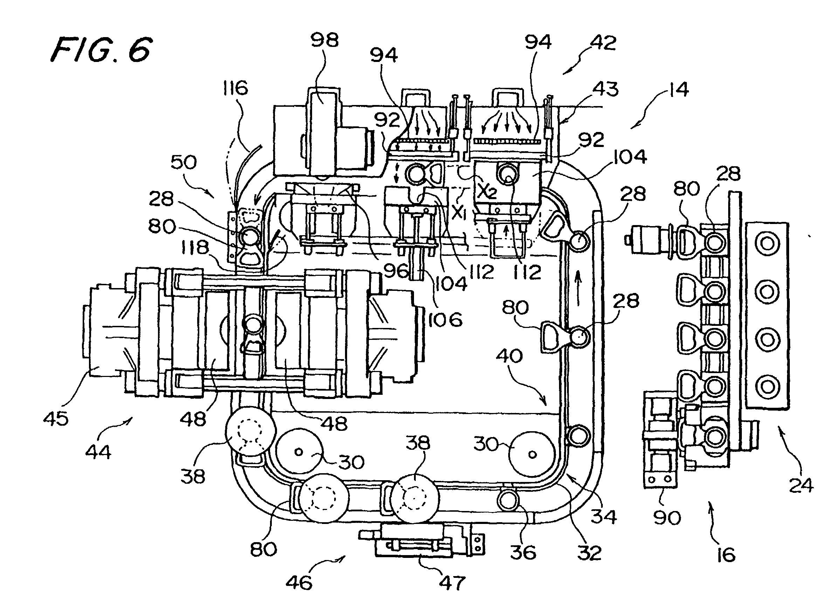

As shown in Fig. 6, the injection-molded preforms 28 are delivered to the delivering section 16 from the removing section 24. At this time, the upright preforms 28 are inverted by an inverting mechanism 90. After been inverted, the preforms 28 are then delivered to the respective carriers 36 in the receiving section 40 of the blow molding station 14. The carriers 36 are intermittently carried by the carrying chain 32 of the carrying means 34 while holding the preforms 28. The preforms 28 are heated by the heating device 43 in the heating section 42 before they are placed in the stand-by section 50. The preforms 28 are then blow molded into containers 38 in the blow molding section 44. The molded containers 38 are finally removed out of the system at the container removing section 46.

In the heating section 42, three of the preforms 28 are stopped in place. The heating device 43 has infrared heaters 92 disposed therein at three positions in which the three preforms 28 are stopped. The heaters extend in the preform carrying direction. Reflectors 94 and 96 are provided in the carrying path on each side.

The outer reflectors 94 are perforated through which air is blown from blowers 98 toward the preforms 28. Thus, the surfaces of the preforms 28 can be appropriately cooled without overheating.

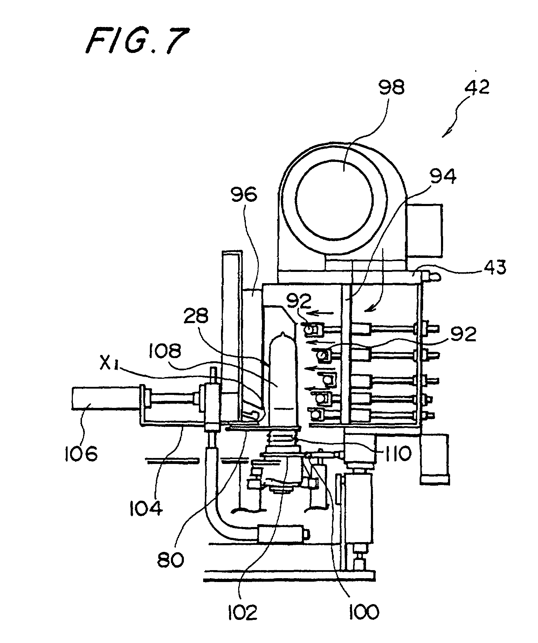

As the carriers 36 are moved through the heating device 43, each of the carriers 36 is rotated around its longitudinal axis by a carrying chain 100 provided at the carrying path through the preform rotation sprocket 102 mounted on the carrier 36, as shown in Fig. 7. Thus, a preform 28 held by each of the carriers 36 is rotated around its axis so that it will be heated uniformly in a circumferential direction.

As will be apparent from Fig. 7, each of the infrared heater sets includes a plurality of infrared heaters 92 arranged one above another in a direction of the height of the preform and movable horizontally relative to the preform to provide a desired temperature distribution in a direction of the height of the preform 28.

At each of the positions in which the preforms 28 are stopped within the heating section 42, a thermal insulation shutter 104 is located in the carrying path at the inner side. Such a thermal insulation shutter 104 can be moved toward or away from the corresponding preform 28 by a movement means such as a shutter cylinder 106.

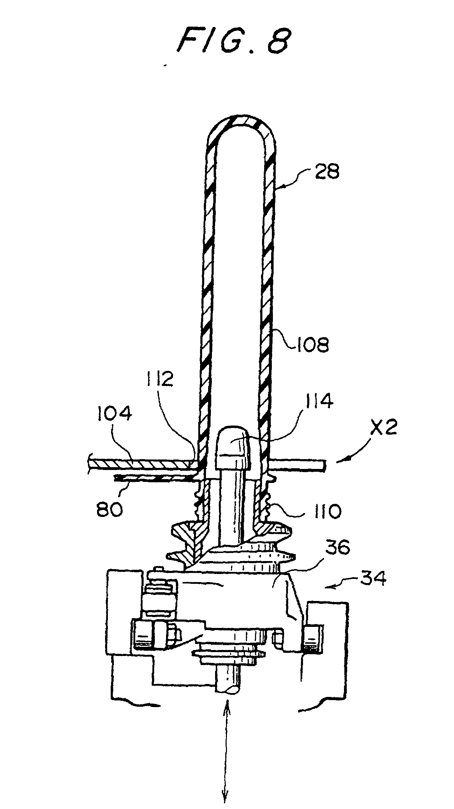

As shown in Fig. 8, each of the thermal insulation shutters 104 is located at apposition close to the boundary between a portion to be heated (e.g., barrel 108) and a portion not to be heated (e.g., neck 110, handle 80) of the preform 28. When the preforms 28 are to be moved, each of the shutter cylinders 106 is actuated to retreat the thermal insulation shutter 104 to a position X1 (see Fig. 7) in which the shutter 104 does not interfere with movement of the preform 28. When the preform 28 has been stopped, the shutter cylinder 106 is again actuated to move or advance the thermal insulation shutter 104 to a position X2 in which the shutter 104 is placed nearest to one of the preforms 28, as shown in Fig. 8. Each of the thermal insulation shutters 104 has an opening 112 having its width larger than the diameter of the corresponding portion of the preform 28. Thus, the thermal insulation shutter 104 can substantially completely cover the handle 80 and neck 110 of a preform 28 (see Fig. 8). Therefore, the thermal insulation shutter 104 can reliably prevent the handle 80 and neck, 110 of the preform 28 from being heated. Furthermore, the thermal insulation shutter 104 can reflect the infrared rays to effectively the shoulder of the preform which is most hardly stretched and desired to receive more heat. In addition, the preform portion located below the thermal insulation shutter 104, that is, the portion not to be heated in the preform can be effectively protected from heat by introducing a cooling air from the corresponding blower 98 through the openings in the reflector 94 or exclusive air blowing ports provided below the reflector 94. In such a case, however, the thermal insulation shutters 104 are not necessarily required.

There is further provided a heating rod 114 which can be inserted into the interior of each of the preforms 28 through the corresponding carrier 36 to heat the preform 28 from inside at each of the positions in which the preform 28 is stopped within the heating section 42 (see Fig. 8).

Each of such heating rods 114 is movable between a position higher than the thermal insulation shutter 104 and a position in which the heating rod 114 will not interfere with movement of the preforms 28, through an elevator means (not shown).

Thus, each of the heating rods 114 can further heat the inside of the preform portion corresponding to the shoulder of a container to be molded. This can further improve the blow molding process.

The stand-by section 50 includes two elastically-deformable guide plates 116 and 118 located along the carrying path, in order to restrict the direction of the handle 80 in each preform (see Fig. 6). When the handle 80 of the preform 28 is touched by the guide plate 116 or 118, the handle 80 turns forward or backward in the preform carrying direction.

Even though the handle 80 of the preform 28 is directed in any direction after the preform 28 has been rotated around its axis within the heating section, the handle 80 can be properly turned forward or backward in the preform carrying direction by the guide plates 116 and 118.

Such a guide means may take any suitable form which will not apply an increased load to the handle. Alternatively, the direction of the handle 80 may be predicted on the basis of the weight of the handle itself and the rotational inertia to guide the handle by inelastic guide plates.

The other means for arranging the handles 80 in a desired direction may be considered. More particularly, the carriers 36 are again rotated around their axes to arrange the handles 80 in a desired direction after the carriers 36 have been stopped at the stand-by section 50. The handle 80 in each of the re-rotated preforms 28 is then sensed by any suitable non-contact sensor means such as an optical sensor. As such an optical sensor senses the handle 80 properly turned in a predetermined direction, the rotation of the corresponding carrier 36 is stopped. Thus, the handles 80 in all the preforms 28 can be turned to a direction parallel to the predetermined direction such as the preform carrying direction

If a non-contact sensor or an optical sensor is located immediately before the blow molding station and when it senses the handle 80 which is not turned in a direction parallel to the preform carrying direction, any suitable control means may be provided to stop the blow mold clamping operation.

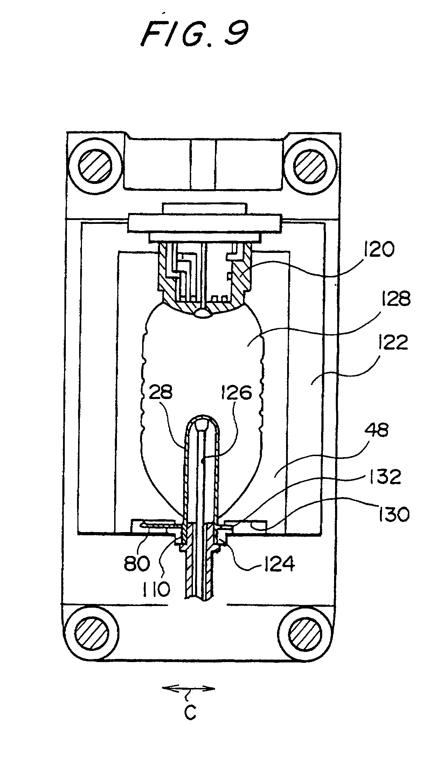

As shown in Figs. 9 to 11, the blow molding section 44 clamps the blow cavity mold 48 consisting of split mold portions, a bottom mold 120 and a mold clamping plate 122. The blow cavity mold 48 includes a neck holder 124 for holding the neck portion of the preform 28 during the blow molding process. The blow molding process is performed by blowing a pressurized air into the preform 28 and also lifting a stretching rod 126. Thus, a container 38 will be stretch-blow molded matching the shapes of the blow cavity 128 in the blow cavity mold 48 and the bottom mold 120.

The underside of the blow cavity mold 48 includes two recesses 130 formed thereon on the opposite sides of the neck holder 124, each of which recesses receives the handle 80 extending in a direction C (or preform carrying direction) perpendicular to the direction B in which the blow cavity mold 48 is to be clamped. Either of the two recesses 130 can reliably receive one handle 80 after it has been turned in a direction parallel to the preform carrying direction through the guide plates 116 and 118. Thus, the blow cavity mold 48 can be prevented from catching the handle 80 independently of the shape or deformed shape thereof.

In addition, the neck holder 124 includes a recess 132 for the handle 80.

Thus, these recesses 130 and 132 define a cavity slightly larger than the shape of the handle 80.

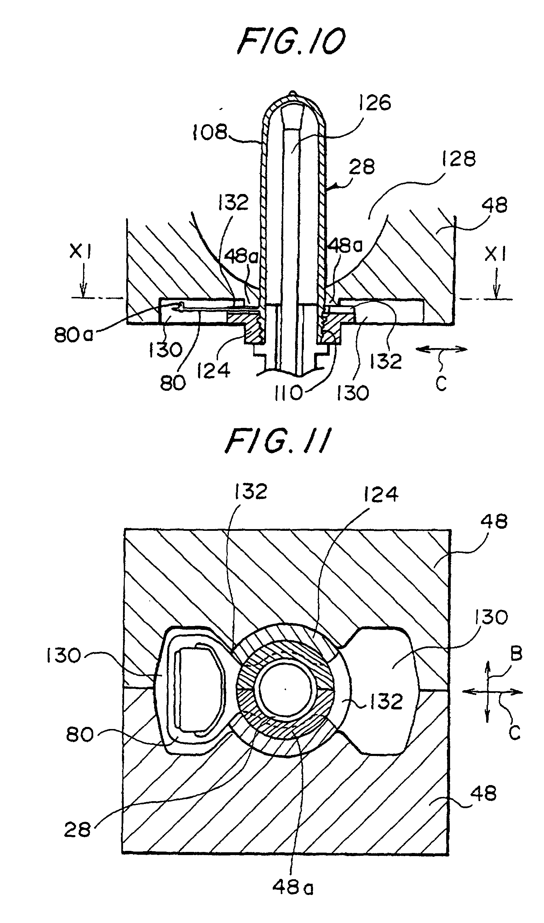

As shown in Figs. 10 and 11, the blow cavity mold 48 further includes a ring-shaped step 48a formed therein to extend outwardly from the bottom of the recesses 130 at a position surrounding the boundary region between the neck and barrel of a preform 28 housed within the blow cavity. This ring-shaped step 48a can prevent the boundary region between the neck 110 and barrel 108 of the preform 28 from being deformed by the blow pressure.

Even though the forwardmost end of the handle 80 has a thickened part 80a as shown in Fig. 10, the thickened part 80a will not interfere with the ring-shaped step 48a when the blow cavity mold 48 is clamped or opened.

The present invention is not limited to the aforementioned form, but may be carried out in any of various different forms within the scope of the invention.

The embodiment of the present invention has been described as to the stretch blow molding apparatus including an integral unit which is formed of the injection and blow molding stations. However, the injection molding station may be in the form of a single and separate one while the blow molding station may be in the form of a single and separate one.

The embodiment of the present invention has been described as to the injection molding station for simultaneously injection-molding four preforms as well as the blow molding station for blow-molding the preforms one at a time. However, the number of preforms or containers to be molded may be suitably selected if necessary.

The embodiment of the present invention has been described as to the handle cavities included in the injection cavity molds. However, the handle cavities may be formed in the neck cavity mold or in both the injection and neck cavity molds.

The shape of the handles may be L-shaped.

## Claims

1. A stretch blow molding apparatus being adapted for molding containers with handles and comprising:
- a carrying path (34) for carrying in a preform carrying direction a preform (28) having a neck (110), a barrel (108), and a handle (80) which is formed adjacent to the boundary between said neck (110) and said barrel (108);
- heating means (42) for heating said barrel (108) of the preform (28); and
- a blow molding section (44) for stretch-blow-molding said preform (28) into a container after the preform (28) has passed through said heating means (42)
wherein the blow molding section (44) is provided with a blow cavity mold (48) which includes a blow cavity (128) for receiving said barrel (108) of the preform (28) and at least one recess (103) for receiving said handle (80) of the preform (28);
**characterized by**
- first rotation means (100, 102) for rotating the preform (28) around its longitudinal axis when the preform (28) is being carried through the heating means (42) along said carrying path (34); and
- arrangement means (50) disposed on the way of said carrying path (34) between said heating means (42) and said blow-molding section (44) for arranging said handle (80) extending from the preform (28) to face in a given direction for receiving said handle (80) in the recess (130) of the blow cavity mold (48) without any interference therewith.

2. The stretch blow molding apparatus as defined in claim 1,
wherein said arrangement means (50) includes guide members (116, 118) for guiding said handle (80) of the preform (28) to face in said given direction.

3. The stretch blow molding apparatus as defined in claim 1, wherein:
said carrying path (34) intermittently carries the preform (28) ; and
said arrangement means (50) includes:
second rotation means for rotating the preform (28) around its longitudinal axis when the preform (28) is stopped on the way of said carrying path (34);
a first sensor for sensing the direction of said handle (80) when the preform (28) is being rotated by said second rotation means; and
first control means for controlling said second rotation means to stop rotating when said first sensor sensed that said handle (80) of the preform (28) faces in said given direction.

4. The stretch blow molding apparatus as defined in any one of claims 1 to 3, further comprising:
a second sensor located-between said arrangement means (50) and said blow molding section (44) for sensing the direction of said handle (80) extending from the preform (28); and
second control means for controlling said blow molding section (44) to stop blow-molding when said second sensor senses that said handle (80) faces in a direction other than said given direction.

5. The stretch blow molding apparatus as defined in any one of claims 1 to 4,
wherein said arrangement means (50) arranges said handle (80) extending from the preform (28) to face in a direction parallel to said preform carrying direction.

6. The stretch blow molding apparatus as defined in claim 5, wherein;
said blow molding section (44) includes a blow cavity mold (48) having a pair of split mold portions which are clamped in a direction perpendicular to said preform carrying direction; and
said blow cavity mold (48) includes:
a blow cavity (128) for receiving said barrel (108) of the preform (28); and
at least one recess (130) formed on an outer surface of said blow cavity mold (48) for receiving said handle (80) of the preform (28).

7. The stretch blow molding apparatus as defined in claim 5,
wherein said blow cavity mold (48) includes one recess (130) formed at an upstream position and other recess (130) formed at a downstream position relative to said preform carrying direction.

8. The stretch blow molding apparatus as defined in claim 6 or 7,
wherein said blow cavity mold (48) includes a ring-shaped step (48a) extending from a bottom of at least one of said recesses (130) at a position surrounding the boundary between said neck (110) and said barrel (108) of the preform (28) housed within said blow cavity (128).

## Patentansprüche

1. Vorrichtung zum Streckblasformen, ausgelegt für das Formen von Behältern mit Griffen, mit:
- einem Transportweg (34) für den Transport eines Vorformlinges (28) in eine Vorformlingtransportrichtung, welcher einen Hals (110), einen Rumpf (108) und einen nahe der Abgrenzung zwischen dem Hals (110) und dem Rumpf (108) ausgebildeten Griff (80) aufweist;
- Heizeinrichtungen (42) zum Erwärmen des Rumpfes (108) des Vorformlings (28) und
- einem Blasformabschnitt (44) zum Streckblasformen des Vorformlings (28) in einen Behälter, nach dem der Vorformling (28) die Heizeinrichtungen (42) durchlaufen hat, wobei der Blasformabschnitt (44) eine Blashohlform (48) aufweist, welche einen Blashohlraum (128) zur Aufnahme des Rumpfes (108) des Vorformlings (28) und mindestens eine Ausnehmung (103) zur Aufnahme des Griffes (80) des Vorformlings (28) umfasst;
**gekennzeichnet,**
- **durch** erste Rotationseinrichtungen (100, 102) zum Rotieren des Vorformlings (28) um seine Längsachse beim Transport des Vorformlings (28) entlang des Transportweges (34) und
- **durch** entlang des Transportweges (34) zwischen den Heizeinrichtungen (42) und dem Blasformabschnitt (44) angeordnete Ausrichteinrichtungen (50) zum Ausrichten des von dem Vorformling (28) abstehenden Griffes in eine vorgegebene Richtung zur Aufnahme des Griffes (80) in die Ausnehmung (130) der Blashohlform (48), ohne dass es zu Störungen mit dieser kommt.

2. Vorrichtung zum Streckblasformen nach Anspruch 1,
wobei die Ausrichteinrichtungen (50) Führungselemente (116, 118) zum Führen des Griffes (80) des Vorformlings (28) aufweisen, damit dieser in die vorgegebene Richtung zeigt.

3. Vorrichtung zum Streckblasformen nach Anspruch 1,
wobei der Transportweg (34) den Vorformling (28) schrittweise transportiert und
wobei die Ausrichteinrichtungen (50)
- zweite Rotationseinrichtungen zum Drehen des Vorformlings (28) um seine Längsachse bei einem Halt des Vorformlings (28) auf dem Transportweg (34);
- einen ersten Sensor zum Erfassen der Richtung des Griffes (80) bei einer Drehung des Vorformlings (28) durch die zweiten Rotationseinrichtungen sowie
- erste Steuerungseinrichtungen aufweisen, welche zum Steuern der zweiten Rotationseinrichtungen dienen, um deren Drehung zu stoppen, wenn der erste Sensor erfasst, dass der Griff (80) des Vorformlings (28) in die vorgegebene Richtung zeigt.

4. Vorrichtung zum Streckblasformen nach einem der Ansprüche 1 bis 3, die ferner umfasst:
- einen zwischen den Ausrichteinrichtungen (50) und dem Blasformabschnitt (44) angeordneten zweiten Sensor zum Erfassen der Richtung des von dem Vorformling (28) abstehenden Griffes (80) und
- zweite Steuerungseinrichtungen zum Steuern des Blasformabschnittes (44), um das Blasformen zu stoppen, wenn der zweite Sensor erfasst, dass der Griff (80) in eine andere Richtung als die vorgegebene Richtung zeigt.

5. Vorrichtung zum Streckblasformen nach einem der Ansprüche 1 bis 4, wobei die Ausrichteinrichtungen (50) den von dem Vorformling (28) abstehenden Griff (80) ausrichten, damit er in eine zur Vorformlingtransportrichtung parallel verlaufende Richtung zeigt.

6. Vorrichtung zum Streckblasformen nach Anspruch 5,
wobei der Blasformabschnitt (44) eine Blashohlform (48) hat, welche ein Paar geteilte Formabschnitte aufweist, die in einer rechtwinklig zur Vorformlingtransportrichtung verlaufenden Richtung geklemmt sind; und
wobei die Blashohlform (48)
- einen Blashohlraum (128) zur Aufnahme des Rumpfes (108) des Vorformlings (28) und
- mindestens eine an einer Außenoberfläche der Blashohlform (48) ausgebildete Ausnehmung (130) zur Aufnahme des Griffes (80) des Vorformlings (28) aufweist.

7. Vorrichtung zum Streckblasformen nach Anspruch 5,
wobei die Blashohlform (48) eine Ausnehmung (130), die an einer Position entgegen der Richtung der Vorformlingtransportrichtung, sowie eine weitere Ausnehmung (130), die an einer Position in Richtung der Vorformlingtransportrichtung ausgebildet ist, aufweist.

8. Vorrichtung zum Streckblasformen nach Anspruch 6 oder 7,
wobei die Blashohlform (48) einen ringförmigen Absatz (48a) aufweist, welcher sich ausgehend von einer Basis zumindest einer der Ausnehmungen (130) an einer die Abgrenzung zwischen dem Hals (110) und dem Rumpf (108) des in dem Blashohlraum (128) aufgenommenen Vorformlings (128) umlaufenden Stelle erstreckt.

## Revendications

1. Dispositif de moulage par étirage-soufflage, adapté au formage de récipients munis de poignées et comprenant :
- un circuit de transport (34) pour transporter, dans une direction de transport de préformes, une préforme (28) pourvue d'un goulot (110), d'un corps cylindrique (108) et d'une poignée (80) qui est formée adjacente à la limite entre ledit goulot (110) et ledit corps cylindrique (108) ;
- des moyens de chauffage (42) pour chauffer ledit corps cylindrique (108) de la préforme (28) ; et
- une section de moulage par soufflage (44) pour le moulage par étirage-soufflage avec étirage de ladite préforme (28) en un récipient après que la préforme (28) soit passée dans lesdits moyens de chauffage (42),
la section de moulage par soufflage (44) étant munie d'un moule (48) à cavité de soufflage qui englobe une cavité de soufflage (128) destinée à recevoir ledit corps cylindrique (108) de la préforme (28) et au moins un évidement (130) destiné à recevoir ladite poignée (80) de la préforme (28) ;
***caractérisé par*** :
- des premiers moyens de rotation (100, 102) pour entraîner en rotation la préforme (28) autour de son axe longitudinal lorsque la préforme (28) est transportée à travers les moyens de chauffage (42) le long dudit circuit de transport (34) ; et
- des moyens de placement (50) disposés sur le trajet dudit circuit de transport (34) entre lesdits moyens de chauffage (42) et ladite section de moulage par soufflage (44) pour positionner ladite poignée (80) saillant de la préforme (28) pour qu'elle soit orientée dans une direction donnée pour recevoir ladite poignée (80) dans l'évidement (130) du moule (48) à cavité de soufflage sans qu'il y ait d'interférences.

2. Dispositif de moulage par étirage-soufflage selon la Revendication 1, dans lequel lesdits moyens de placement (50) comprennent des éléments de guidage (116, 118) pour guider ladite poignée (80) de la préforme (28) pour qu'elle soit orientée dans ladite direction donnée.

3. Dispositif de moulage par étirage-soufflage selon la Revendication 1, dans lequel :
ledit circuit de transport (34) transporte la préforme (28) de manière intermittente ; et
lesdits moyens de placement (50) comprennent :
des seconds moyens de rotation pour entraîner en rotation la préforme (28) autour de son axe longitudinal lors que la préforme (28) est arrêtée sur le trajet dudit circuit de transport (34) ;
un premier capteur pour détecteur la direction de ladite poignée (80) lorsque la préforme (28) est entraînée en rotation par lesdites seconds moyens de rotation ; et
des premiers moyens de commande pour contrôler lesdits seconds moyens de rotation afin qu'ils cessent de tourner lorsque ledit premier capteur a détecté que ladite poignée (80) de la préforme (28) est orientée dans ladite direction donnée.

4. Dispositif de moulage par étirage-soufflage selon l'une quelconque des Revendications 1 à 3, comprenant de plus :
un second capteur situé entre lesdits moyens de placement (50) et ladite section de moulage par soufflage (44) destinés à détecter la direction de ladite poignée (80) saillant de ladite préforme (28) ; et
des seconds moyens de commande pour commander ladite section de moulage par soufflage (44) de manière à faire cesser le moulage par soufflage lorsque ledit second capteur détecte que ladite poignée (80) est orientée dans une direction autre que ladite direction donnée.

5. Dispositif de moulage par étirage-soufflage selon l'une quelconque des Revendications 1 à 4, dans lequel lesdits moyens de placement (50) positionnent ladite poignée (80) saillant de la préforme (28) pour qu'elle soit orientée dans une direction parallèle à ladite direction de transport de la préforme.

6. Dispositif de moulage par étirage-soufflage selon la Revendication 5, dans lequel :
ladite section de moulage par soufflage (44) comprend un moule (48) à cavité de soufflage ayant deux parties en demi-moules qui sont associées par serrage dans une direction perpendiculaire à ladite direction de transport de la préforme ;
ledit moule (48) à cavité de soufflage comprend :
une cavité de soufflage (128) destinée à recevoir ledit corps cylindrique (108) de la préforme (28) ; et
au moins un évidement (130) formé sur une surface extérieure dudit moule (48) à cavité de soufflage, destiné à recevoir ladite poignée (80) de la préforme (28).

7. Dispositif de moulage par étirage-soufflage selon la Revendication 5, dans lequel ledit moule (48) à cavité de soufflage comprend un évidement (130) formé dans une position en amont et un autre évidement (130) formé dans une position en aval par rapport à ladite direction de transport de la préforme.

8. Dispositif de moulage par étirage-soufflage selon la Revendication 6 ou 7, dans lequel ledit moule (48) à cavité de soufflage comprend un gradin (48a) de forme annulaire partant du fond d'au moins un desdits évidements (130) dans une position entourant la limite entre ledit goulot (110) et ledit corps cylindrique (108) de la préforme (28) logée dans ladite cavité de soufflage (128).
